# EUROPEAN PATENT SPECIFICATION

(11) **EP 2 510 797 B1**
(45) Date of publication and mention of the grant of the patent: **11.06.2014**
(21) Application number: 10835976.1
(22) Date of filing: 08.12.2010
(51) Int. Cl.: A23F 3/20

(54) **METHOD FOR PRODUCING PURIFIED TEA EXTRACT**
VERFAHREN ZUR HERSTELLUNG EINES GEREINIGTEN TEEEXTRAKTS
PROCEDE DE PRODUCTION D'EXTRAIT DE THE PURIFIE

(30) Priority: 09.12.2009 JP 2009279300
(43) Date of publication of application: 17.10.2012
(73) Proprietor: Kao Corporation, Chuo-Ku Tokyo 103-8210 (JP)
(72) Inventor: SHIKATA, Kenichi, Kamisu-shi Ibaraki 314-0103 (JP); SATO, Hitoshi, Kamisu-shi Ibaraki 314-0103 (JP)
(74) Representative: HOFFMANN EITLE
(86) International application number: PCT/JP2010/071956
(87) International publication number: WO 2011/071056

(56) References cited:
- EP-A1- 2 008 525
- WO-A2-2009/047639
- JP-A- 2005 245 307
- JP-A- 2008 220 202
- JP-A- 2009 225 728
- JP-A- 2009 247 215
- US-A1- 2006 263 454

## Description

### Field of the Invention

This invention relates to a method for producing a purified tea extract.

### Background of the Invention

Reflecting diversification of consumer's tastes and ever-growing health consciousness of consumers, a wide variety of beverages have been put on the market. Among these, tea beverages are drawing attention. These tea beverages can be produced, for example, by using a tea extract or the like and adding the non-polymer catechins in a dissolved form to a beverage.

Depending on the tea extract added to the tea beverage, however, the taste and flavor inherent to tea may have been impaired due to the bitterness originated from gallate forms of the non-polymer catechins, said gallate forms being contained in the non-polymer catechins, or the sourness originated from organic acids derived from tea, such as gallic acid, oxalic acid and quinic acid.

With a view to solving such a problem, methods have been proposed, for example, to subject a tea extract, which has been obtained from tea, to tannase treatment as one way to reduce bitterness (Patent Documents 1 to 2). These methods lower the ratio of bitter components by decomposing gallate forms of the non-polymer catechins into the non-polymer catechins and gallic acid, but the sourness originated from the freed gallic acid may be felt.

As technologies for removing such liberated gallic acid, on the other hand, methods have been proposed, for example, to remove gallic acid by bringing an aqueous solution of a tea extract, which has been subjected to tannase treatment, into contact with an anion exchange resin (Patent Documents 3 to 4).

[Patent Document 1] JP-A-2004-321105
[Patent Document 2] JP-A-2005-130809
[Patent Document 3] JP-A-2007-195458
[Patent Document 4] JP-A-2008-220202

In addition to the above patent documents, reference is also made to the following documents:
US 2006/0263454 A1 describes a process for producing a purified product of green tea extract, which includes subjecting an aqueous solution of green tea extract to solid-liquid separation by filtration and/or centrifugal separation which is then passed through a polymer membrane having a membrane pore size of from 0.05 to 0.8 µm.
EP 2008525 A1 describes a process for producing a purified green tea extract including mixing a green tea extract treated with an enzyme having a tannase activity in a mixed solution containing an organic solvent and water at a mass ratio from 60/40 to 90/10 and separating a precipitate thus formed.
JP 2009-247215 A describes a bottled drink that includes (a) 0.005 to 1.0 mass% of a non-polymerized catechin compound, (b) 0.001 to 0.7 mass% of proanthocyanidin, and (c) 0 to 1.0 mass% of carbon dioxide, wherein (d) the mass ratio of the non-polymerized catechin compound/all polyphenols is 0.4 to 0.95.
JP2005-245307 A describes a process for preparing a liquid containing desorbed tea catechin which involves bringing a plant extract liquid, such as extracted tea, into contact with a weakly basic anion exchange resin to selectively adsorb the polyphenols such as tea catechin to the weakly basic anion exchange resin. Then the polyphenols adsorbed to the anion exchange resin are desorbed by using a sodium hydroxide solution, etc., as a desorbing liquid to obtain the liquid containing desorbed tea catechin.
WO 2009/047639 A2 describes a method of eliminating gallated catechins, especially epigallocatechin gallate (EGCG), epicatechin gallate (ECG), as well as parathion, from green tea extraction by using at least one out of ethyl acetate, Cetyl Trimethyl Ammonium Bromide (CTAB), cation exchange resin, anion exchange resin, C 18 bead, PEG bead and mPEG.

### Summary of the Invention

This invention provides a method for producing a purified tea extract, including bringing a tea extract, which contains an aqueous solution of ethanol, into contact with an anion exchange resin.

### Detailed Description of the Invention

When an aqueous solution of a tea extract, which has been subjected to tannase treatment, is brought into contact with an anion exchange resin under conditions that can sufficiently lower the sourness originated from gallic acid, the non-polymer catechins may be obtained only at a considerably lowered recovery rate. It is, therefore, desired to develop a method for the production of a purified tea extract, which can satisfy both the yield of the non-polymer catechins and the removal rate of gallic acid at high levels.

The present invention is, therefore, to provide a method for the production of a purified tea extract, which can satisfy both the yield of the non-polymer catechins and the removal rate of gallic acid at high levels.

To have an adsorbate adsorbed on an anion exchange resin, the adsorbate needs to have dissociated and to exist in an anionic form. For full dissociation of the adsorbate, the use of an aqueous solution free of any organic solvent is considered to be advantageous. In the presence of an organic solvent, on the other hand, the anion exchange resin may be lowered in exchange capacity due to its expansion or the like. In this respect, it is also considered to be advantageous to use an aqueous solution which is free of any organic solvent. Contrary to such a prediction, however, the present inventors have unexpectedly found that, when a tea extract is brought into contact with an anion exchange resin in the presence of an aqueous solution of an organic solvent, said aqueous solution being a mixture of water and the organic solvent, it is possible not only to efficiently remove gallic acid but also to recover the non-polymer catechins with high yield.

According to the present invention, the non-polymer catechins can be recovered with high yield while efficiently removing gallic acid. The method according to the present invention is, therefore, effective especially for the purification of a tea extract which has been subjected to tannase treatment and contains the freed gallic acid.

Despite the purified tea extract obtained by the production method of the present invention contains the non-polymer catechins at high concentration, it is useful as an ingredient for the beverages and foods with the non-polymer catechins at high concentration because it has been reduced in the bitterness originated from gallate forms of the non-polymer catechins and also in the sourness originated from gallic acid.

A description will first be made about terms to be used herein.

The term "the non-polymer catechins (A)" as used herein is a generic term, which collectively encompasses non-epi-formcatechins suchas catechin, gallocatechin, catechin gallate and gallocatechin gallate, and epi-form catechins such as epicatechin, epigallocatechin, epicatechin gallate and epigallocatechin gallate. The concentration of the non-polymer catechins is defined based on the total amount of the above-described eight non-polymer catechins.

The term "gallate forms (B) of the non-polymer catechins (hereinafter also called "gallate forms (B)")" as used herein is a generic term, which collectively encompasses catechin gallate, gallocatechin gallate, epicatechin gallate and epigallocatechin gallate or the like, and the term "ratio of gallate forms (B) in the non-polymer catechins (A) " indicates the mass ratio of the four gallate forms based on a total amount of the non-polymer catechins.

The term "tea extract" is a concept that encompasses a tea extract solution or its concentrate in the form of a liquid, and a tea extract solution or its concentrate in the form of a solid.

It is to be noted that the term "tea extract solution" means one extracted from tea with hot water or a hydrophilic organic solvent by kneader extraction, column extraction or the like, and subjected to neither concentration nor purification operation. As the hydrophilic organic solvent, an alcohol such as ethanol may be used.

As the tea for use in the extraction, a tea tree selected, for example, from the Genus Camellia, e.g., C. var. sinensis (including the Yabukita variety), C. var. assamica or a hybrid thereof is suited. Depending on the preparation method, tea trees may be roughly classifiedinto non-fermentedteas,semi-fermentedteas andfermentedteas. As illustrative non-fermented teas, green teas such as *sencha*, *bancha, tencha, kamairicha, kukicha*, *bocha* and *mecha* is exemplified. As illustrative semi-fermented tea, oolong teas such as *tekkannon, irotane, ougonkei* and *buigancha* is exemplified. Further, as fermented tea, black teas such as Darjeeling, Assam and Ceylon is exemplified. These teas may be used either singly or in combination of two or more. Of these, green teas are preferred from the standpoint of the content of the non-polymer catechins.

The term "concentrate of a tea extract solution" means one obtained, from a tea extract solution which has been extracted from tea with water or a hydrophilic organic solvent, with the non-polymer catechins at a concentration raised by removing a portion of the solvent, and can be prepared, for example, by the method disclosed in JP-A-59-219384, JP-A-04-020589, JP-A-05-260907, JP-A-05-306279 or the like.

The term "tea extract solution or its concentrate in the form of a solid" means one obtained by drying or solidifying a tea extract solution or its concentrate by a known method. As such a solid, a commercially-available product may be used. For example, "POLYPHENON" (product of Mitsui Norin Co., Ltd.), "TEAFURAN" (product of ITO EN, LTD.), "SUNPHENON" (product of Taiyo Kagaku Co., Ltd.) or the like is exemplified.

In the present invention, as the tea extract, one subjected to tannase treatment may also be used. The term "tannase treatment" as used herein means to bring a tea extract into contact with an enzyme having tannase activity. From the viewpoint of enzyme activity, tannase treatment is conducted in a state that a tea extract is dissolved or dispersed in water, and no organic solvent is generally contained therein. When a tea extract solution extracted from tea with a hydrophilic organic solvent is used as a tea extract and is subjected to tannase treatment, the organic solvent in the tea extract solution is removed and is replaced by water.

The concentration of the non-polymer catechins in an aqueous solution of a tea extract upon conducting tannase treatment maybe preferably from 0.1 to 1. 5 mass%, more preferably from 0.1 to 1 mass% , even more preferably 0.5 to 1 mass%. For adjustment to such a concentration of the non-polymer catechins, the tea extract may be, for example, either concentrated or diluted with water as needed.

As enzymes having tannase activity, tannase obtainable by culturing tannase-producing fungi of the Aspergillus, Penicillium and Rhizopus genera can be exemplified. Of these, one available from Aspergillus oryzae is preferred.

It is to be noted that as a specific operation procedure in tannase treatment, a known method may be adopted, for example, the method disclosed in JP-A-2004-321105 is exemplified.

In the method of the present invention for the production of the purified tea extract, a tea extract which contains an aqueous solution of ethanol is brought into contact with an anion exchange resin. No particular limitation is imposed on the preparation method for the tea extract which contains the aqueous solution of ethanol and is used upon conducting the contact. For example, ethanol may be added to the tea extract solution or its concentrate in the form of a liquid, or the aqueous solution of ethanol may be added to the tea extract solution or its concentrate in the form of a solid.

Ethanol is used from the standpoint of dissociation properties of an adsorbate and from the viewpoint of the use in beverages and foods.

Concerning the concentration of ethanol in its aqueous solution contained in the tea extract, its lower limit may be preferably 10 mass%, more preferably 25 mass%, more preferably 35 mass%, more preferably 45 mass%, more preferably 55 mass%, even more preferably 65 mass%, and on the other hand, its upper limit may be preferably 95 mass%, more preferably 92.4 mass%, even more preferably 90 mass%, both from the viewpoints of the recovery rate of the non-polymer catechins and the removal efficiency of gallic acid.

In the present invention, either a strong basic anion exchange resin or a weak basic anion exchange resin is usable as an anion exchange resin. A weak basic anion exchange resin is preferred from the viewpoints of improvements in the recovery of the non-polymer catechins and the removal rate of gallic acid.

As illustrative strong basic anion exchange resins, the "DIAION-SA Series" (strong basic gel type: "SA10A", "SA11A", "SA12A", "SA20A", "SA21A", etc., products of Mitsubishi Chemical Corporation), the "DIAION-PA Series" (strong basic porous type: "PA306", "PA308", "PA312", "PA316", "PA318", "PA406", "PA408", "PA412", "PA416", "PA418", etc., products of Mitsubishi Chemical Corporation), "HPA25" (strong basic high porous type, product of Mitsubishi Chemical Corporation), "AMBERLITE" ("IRA400J", "IRA410J", "IRA900J", etc., product of Rohm and Haas Company), and "DOWEX" ("MARATHON A", "MARATHON A2", etc., products of The Dow Chemical Company) is exemplified.

As illustrative weak basic anion exchange resins, the "WA Series" (acrylic-based: "WA10", "WA11", etc., styrene-based: "WA20", "WA21J", "WA30", etc., products of Mitsubishi Chemical Corporation), "AMBERLITE" (acrylic-based: "IRA67", styrene-based: "IRA96SB", "XT6050RF", etc., products of Rohm and Haas Company), and "DOWEX 66" (product of The Dow Chemical Company) is exemplified.

In the present invention, it is preferred to use, as an anion exchange resin, one in which the anionic groups have been exchanged with anionic groups derived from an organic acid having a pKa of from 4.16 to 8.55. The use of such an anion exchange resin makes it possible to satisfy both the recovery rate of the non-polymer catechins and the removal rate of gallic acid at much higher level, and also, to improve the taste and flavor.

No particular limitation is imposed on the organic acid insofar as its pKa is from 4.16 to 8.55. From the viewpoints of improvements in the recovery rate of the non-polymer catechins and the removal rate of gallic acid, organic acids having pKa of from 4.16 to 5 are preferred, and specifically, ascorbic acid (pKa: 4.17), acetic acid (pKa: 4.76), propionic acid (pKa: 4.87), butyric acid (pKa : 4.82) and valeric acid (pKa : 4.84) is exemplified. Of these, ascorbic acid and acetic acid are preferred. It is to be noted that the term "pKa" as used herein means an acid dissociation constant in an aqueous solution of 25°C, and in the case of a polyhydric acid, it represents a first acid dissociation constant.

As a method for exchanging the anionic groups of an anion exchange resin, a method that brings the anion exchange resin into contact with an aqueous solution of an organic acid is exemplified, for example. This contact may be conducted a plurality of times.

The concentration of the organic acid in its aqueous solution upon bringing the anion exchange resin into contact may be preferably from 0.1 to 15 mass%, more preferably from 1 to 10 mass%. Upon bringing the anion exchange resin into contact, an amount of the aqueous solution of the organic acid to be used per contact may be preferably from 5 to 100 times, more preferably from 10 to 40 times the total mass of the anion exchange resin. After the contact with the aqueous solution of the organic acid, the anion exchange resin may preferably be washed with from 5 to 50 times as much water as the total mass of the anion exchange resin.

Before the contact of the anion exchange resin with the tea extract which contains the aqueous solution of ethanol, the anion exchange resin may preferably be washed once or more with the aqueous solution of ethanol used for the preparation of the tea extract which contains the aqueous solution of ethanol.

As an anion exchange resin for use in the present invention, it needs to have anion exchange capacity and also to be insoluble in the tea extract. No particular limitation is imposed on its form. For example, a powder form, sphere form, fiber form, film form or the like may be chosen as desired. The form of a resin matrix may also be selectively determined to be of the gel type, porous type, high porous type or the like. As illustrative resin matrixes, those formed of styrene-divinylbenzene or (meth)acrylic acid as a matrix is exemplified. Of these, those formed of (meth)acrylic acid as a matrix are preferred. It is to be noted that the term "(meth)acrylic acid" is a concept which encompasses acrylic acid and methacrylic acid.

The use amount of the anion exchange resin may be preferably from 0.001 to 0.5 times, more preferably from 0.001 to 0.1 times, more preferably from 0.005 to 0.07 times, even more preferably from 0.01 to 0.05 times as much as the total mass of the tea extract containing the aqueous solution of ethanol from the viewpoints of improvements in the removal efficiency of gallic acid ions and the recovery rate of the non-polymer catechins. The concentration of the non-polymer catechins in the tea extract containing the aqueous solution of ethanol may be from 0.1 to 6 mass%, more preferably from 0.3 to 4 mass%, even more preferably 0.5 to 1.5 mass% from the viewpoints of improvements in the recovery rate of the non-polymer catechins and the removal rate of gallic acid.

Upon bringing into contact with the anion exchange resin the tea extract that contains the aqueous solution of ethanol, the temperature may be preferably from 0 to 40°C, more preferably from 10 to 35°C, even more preferably from 20 to 30°C.

As a method for bringing into contact with the anion exchange resin the tea extract that contains the aqueous solution of ethanol, a batch method, a column method or the like may be used. According to the batch method, the anion exchange resin is added to and stirred with the tea extract to induce adsorption, and then the anion exchange resin is recovered by a filter operation. According to the column method, the tea extract is passed through a column packed with the anion exchange resin to continuously conduct adsorption treatment.

When the batch method is adopted, the time of contact between the anion exchange resin and the tea extract may be determined as needed, and is preferably from 0.5 to 10 hours, more preferably from 1 to 5 hours.

When the column method is used, the condition for passing the tea extract through the column may be preferably from 1 to 60/hr, more preferably from 3 to 30/hr, in terms of space velocity (SV).

In the present invention, the tea extract after its contact with the anion exchange resin may be treated further with activated carbon. By this treatment with activated carbon, the taste and flavor of the purified tea extract can be improved further. The taste and flavor to be improved include harshness. The term "harshness" means bitterness accompanied by as tringency and is felt as a rough sensation remaining in the mouth.

As illustrative raw materials for the activated carbon to be used in the treatment with activated carbon, palm shells, wood and coal is exemplified. Of these, wood is preferred. As illustrative activation processes for the activated carbon, steam activation, gas activation and chemical activation is exemplified. Of these, chemical activation is preferred.

From the standpoint of improvements in taste and flavor, a reduction in the use amount of activated carbon and an improvement in the recovery rate, it is preferable to use the activated carbon having the below-described properties. The average pore size may be preferably from 0.5 to 10 nm (nanometers), more preferably from 0.7 to 9 nm, even more preferably from 1 to 8 nm. The pore volume may be preferably from 0.01 to 2.5 mL/g, more preferably from 0.1 to 2.0 mL/g, even more preferably from 0.5 to 1.8 mL/g. The specific surface area may be in a range of preferably from 800 to 2,000 m²/g, more preferably from 900 to 1,900 m²/g, even more preferably from 1, 000 to 1, 800 m²/g. It is to be noted that these physical values are ones based on the nitrogen adsorption method.

As illustrative activated carbons having such properties, exemplified is commercially-available products such as "ZN-50", "Y-10S", "GS-1", "GS-B" (products of Aj inomoto Fine-Techno Co. , Ltd.), "KURARAY COAL GLC", "KURARAY COAL PK-D", "KURARAY COAL PW-D", "KURARAYCOALGW", "KURARAYCOALGA", "KURARAYCOALGA-D", "KURARAY COAL RP-15" (products of Kuraray Chemical Co. , Ltd.), "SHIRASAGI AW50", "SHIRASAGI A", "SHIRASAGI P", "SHIRASAGI KL", "SHIRASAGI M", "SHIRASAGI C", "CARBORAFIN", "WH2C" (products of Japan Envirochemicals, Ltd.), "GM130A", "CW130A", "CW130AR", "CW350AR", "GL130A", "SG", "SGA", "SGP" (products of Futamura Chemical Co., Ltd.), "YASHICOAL", "MAS BRAND", "BAIHO BRAND", "BAIHO F BRAND" (products of Taihei Chemical Industrial Co., Ltd.), and "CPG", "CAL", "S80A" (products of Calgon Mitsubishi Chemical Corporation).

From the standpoints of purification effects and an improvement in the recovery rate of the non-polymer catechins, as well as a reduction of cake resistance in the filtration step, the used amount of activated carbon may be preferably from 0.1 to 2 parts by mass, more preferably from 0.2 to 1.5 parts by mass, even more preferably from 0.3 to 1.2 parts by mass, relative to parts by mass of the non-polymer catechins in the tea extract after its contact with the anion exchange resin.

Upon bringing the tea extract after its contact with the anion exchange resin into contact with activated carbon, the ethanol may be removed beforehand from the tea extract, or may be still contained in the tea extract.

Concerning the concentration of the ethanol in its aqueous solution contained in the tea extract upon bringing the tea extract into contact with the activated carbon, its lower limit may be preferably 10 mass%, more preferably 25 mass%, more preferably 35 mass%, more preferably 45 mass%, more preferably 55 mass%, even more preferably 65 mass%, and on the other hand, its upper limit may be preferably 95 mass%, more preferably 92.4 mass%, even more preferably 90 mass%, both from the viewpoint of a reduction in sourness.

As means for bringing into contact with the activated carbon, a batch method or column method may be used. According to the batch method, the activated carbon is added to and stirred with the tea extract after its contact with the anion exchange resin to induce adsorption, and the activated carbon is then recovered by a filter operation. According to the column method, the tea extract is passed through a column packed with the activated carbon to continuously conduct contact treatment. From the standpoint of productivity, continuous treatment by the column method is preferred. Further, the contact with the activated carbon may be conducted at preferably from 0 to 60°C, more preferably from 10 to 50°C, even more preferably from 15 to 40°C.

The tea extract after its contact with the anion exchange resin or the tea extract after its treatment with the activated carbon may, after the removal of the ethanol, be concentrated or diluted with water as needed to separate out precipitates, and the precipitates may then be removed by solid-liquid separation. This can further improve the taste and flavor of the purified tea extract and enhance the stability of the purified tea extract.

No limitation is particularly imparted to the aging time for separating the precipitates. It may be, for example, preferably from 2 minutes to 50 hours, more preferably from 2 minutes to 24 hours, even more preferably from 5 minutes to 6 hours. On the other hand, the separation temperature may be preferably from -5 to 40°C, more preferably from 5 to 25°C from the standpoints of a reduction in the solubility of the precipitates and a separation property of the precipitates.

As an operation for the solid-liquid separation, methods commonly employed in food industry may be used. For example, filtration, centrifugal separation or the like is exemplified. They may be conducted in combination.

A purified tea extract can be obtained as described. As the product form of the purified tea extract, it may be either a liquid or a solid. When a solid is desired, the purified tea extract can be powderized by a known method such as spray drying or freeze drying.

The purified tea extract so obtained can be provided with the following properties (i) and (ii).
(i) The residual ratio of gallic acid based on the tea extract which contains the aqueous solution of the organic solvent, is preferably 80% or lower, more preferably 70% or lower, even more preferably 65% or lower.
(ii) The yield of the non-polymer catechins based on the tea extract which contains the aqueous solution of the organic solvent, is preferably 60% or higher, more preferably 70% or higher, more preferably 75% or higher, even more preferably 80% or higher.

Despite the purified tea extract containing the non-polymer catechins at high concentration, it enables the development of a wide range of applications because it is reduced in the bitterness originated from gallate forms of the non-polymer catechins and also in the sourness originated from gallic acid. For example, the purified tea extract can be used as an ingredient for beverages and foods as it is or after concentration or dilution with water, and is particularly useful as an ingredient for the beverages and foods containing the non-polymer catechins at high concentration.

Beverages may be tea beverages or non-tea based beverages. As illustrative tea beverages, green tea beverages, oolong tea beverages, and black tea beverages is exemplified. As illustrative non-tea based beverages, on the other hand, non-alcoholic drinks such as fruit juices, vegetable juices, sports drinks, isotonic drinks, enhanced waters, bottled waters, neat waters, coffee drinks, nutritious supplement drinks, and beauty supplement drinks; and alcoholic drinks such as beer, wine, sake, plum-flavored spirits, sparkling liquors, whisky, brandy, distilled spirits, rum, gin, and liqueurs is exemplified.

The pH (25°C) of ach beverage may be adjusted to preferably from 2 to 7, more preferably from 3 to 6 from the standpoints of its taste and flavor and the stability of the non-polymer catechins.

As illustrative foods, on the other hand, confectioneries (e.g., breads, cakes, baked confections such as cookies and biscuits, chewing gums, chocolates, candies), desserts (e.g., jellys, yoghurts, ice creams), retort foods, and seasoning agents (e. g. , sauces, soups, dressings, mayonnaises, creams) is exemplified.

No limitation is particularly imparted to a form of each food and beverage. It may be in any one of solid, powder, liquid, gel, slurry or the like insofar as it is in a palatable form.

To these beverages and foods, additives such as antioxidants, various esters, inorganic salts, colors, emulsifiers, preservatives, seasoning agents, sweeteners, sour seasonings, gums, oils, vitamins, amino acids, vegetable extracts, flower honey extracts, pH regulators and quality stabilizers maybe added either singly or in combination of two or more.

The beverage may be provided by filling it in a conventional package such as a molded package made of polyethylene terephthalate as a principal component (a so-called PET bottle), a metal can, a paper package combined with metal foils or plastic films, a bottle or the like.

Further, a packaged beverage can be produced, for example, by filling the beverage in a package such as a metal can and, when heat sterilization is feasible, conducting heat sterilization under sterilization conditions prescribed in relevant regulations (in Japan, the Food Sanitation Act). For those which cannot be subjected to retort sterilization like PET bottles or paperpackages, a method is adopted such that the beverage is sterilized beforehand at a high temperature for a short time under similar sterilization conditions as described above, for example, by a plate-type heat exchanger or the like, is cooled to a particular temperature, and is then filled in a package. Under aseptic conditions, additional ingredients may be mixed to and filled in a beverage-filled package.

### Examples

### (1) Measurements of the non-polymer catechins and gallic acid

The purified tea extracts obtained in each of Examples and Comparative Examples were each filtered through a filter (0.45 µm). Using a high-performance liquid chromatograph (model: "SCL-10AVP"; manufactured by Shimadzu Corporation), a liquid chromatograph column packed with octadecyl group-introduced silica gel, "L-Column, TM ODS" (4.6 mm in diameter x 250 mm; product of Chemicals Evaluation and Research Institute, Japan) was fitted. The purified tea extract was then subj ected to chromatography at a column temperature of 35°C by the gradient elution method. As a standard product of catechins, one produced by Mitsui Norin Co. , Ltd. was used and was quantified by the calibration curve method. A mobile phase, Solution A, was a solution containing acetic acid at 0.1 mol/L in distilled water, while another mobile phase, Solution B, was a solution containing acetic acid at 0.1 mol/L in acetonitrile. The measurement was conducted under the conditions of 20 µL sample injection volume and 280 nm UV detector wavelength.

### (2) Sensory evaluation

The purified tea extracts obtained in Examples and Comparative Examples, after ethanol had been distilled off if contained, were each diluted with deionized water to lower the concentration of the non-polymer catechins to 175 mg/100 mL, and its taste and flavor was evaluated. The evaluation of taste and flavor was performed by a panel of five trained tasters, and upon deliberation, scores were determined. The evaluation of taste and flavor was performed in the below-described five stages for sourness and harshness. The five-stage evaluation indicates that the greater the score the better the taste and flavor.

### (Evaluation standards)

Score 5: Excellent in taste and flavor
Score 4: Better in taste and flavor
Score 3: Good in taste and flavor
Score 2: A little inferior in taste and flavor
Score 1: Inferior in taste and flavor

### Production Example 1

### Production of anion exchange resin having anionic groups derived from ascorbic acid

A weak basic anion exchange resin ("WA10", product of Mitsubishi Chemical Corporation; 106 g) was weighed, and was combined and stirred for 75 minutes with an aliquot (1,200 g) of a 5.0 mass% aqueous solution of ascorbic acid. The weak basic anion exchange resin was collected by filtration, and was then combined and stirred for 75 minutes with a fresh aliquot (1,200 g) of the 5.0 mass% aqueous solution of ascorbic acid. Those collection, combination and stirring were repeated 3 times to produce a weak basic anion exchange resin having anionic groups derived from ascorbic acid (hereinafter called "the ascorbate-form weak basic anion exchange resin"). After that, the ascorbate-form weak basic anion exchange resin was washed thrice with water (1,200 g each time).

### Production Example 2

### Production of anion exchange resin having anionic groups derived from acetic acid

A weak basic anion exchange resin having anionic groups derived from acetic acid (hereinafter called "the acetate-form anion exchange resin") was produced by a similar procedure as in Production Example 1 except that the 5.0 mass% aqueous solution of ascorbic acid was changed to a 5.0 mass% aqueous solution of acetic acid. After that, the acetate-form anion exchange resin was washed thrice with water (1,200 g each time).

### Example 1

A solid (concentration of the non-polymer catechins: 30 mass%, ratio of gallate forms in the non-polymer catechins: 32 mass%, concentration of gallic acid: 3.7 mass%; 4.5 g) of a green tea extract, which had been subj ected to tannase treatment beforehand, was fully mixed with an aliquot (100 g) of a 20 mass% aqueous solution of ethanol, followed by filtration through a filter paper. The filtrate was next adjusted in concentration with a fresh aliquot of the 20 mass% aqueous solution of ethanol such that the concentration of the non-polymer catechins was become to approx. 0.9 mass%, whereby a green tea extract containing an aqueous solution of ethanol was obtained. In the green tea extract with the aqueous solution of ethanol contained therein, the concentration of the non-polymer catechins was 0.938 mass%, the ratio of gallate forms in the non-polymer catechins was 32 mass%, and the concentration of gallic acid was 0.116 mass%.

After the ascorbate-form anion exchange resin obtained in Production Example 1 was washed with another freshaliquot of the 20 mass% aqueous solutionof ethanol, a portion (4 g) of the ascorbate-form anion exchange resin after the washing was collected, and was mixed at 25°C with an aliquot (100 g) of the green tea extract containing the aqueous solution of ethanol. The mixture was mixed, as it was, for 120 minutes while stirring. By filtration, a purified green tea extract (97.6 g) was next obtained. In the purified green tea extract so obtained, the concentration of the non-polymer catechins was 0.675 mass%, the ratio of gallate forms in the non-polymer catechins was 22 mass%, the concentration of gallic acid was 0.045 mass%, and the mass ratio of gallic acid/the non-polymer catechins was 0.067. Further, the yield of the non-polymer catechins was 71.9% based on the green tea extract containing the aqueous solution of ethanol, and the residual ratio of gallic acid was 39.1% based on the green tea extract containing the aqueous solution of ethanol. The production conditions and analysis results of this example are shown in Table 1.

### Example 2

By a similar procedure as in Example 1 except that the 20 mass% aqueous solution of ethanol was changed to a 40 mass% aqueous solution of ethanol, a green tea extract containing an aqueous solution of ethanol was prepared, and a purified green tea extract (97.7 g) was obtained. In the purified green tea extract so obtained, the concentration of the non-polymer catechins was 0.785 mass%, the ratio of gallate forms in the non-polymer catechins was 29 mass%, the concentration of gallic acid was 0.050 mass%, and the mass ratio of gallic acid/the non-polymer catechins was 0.063. Further, the yield of the non-polymer catechins was 82.0% based on the green tea extract containing the aqueous solution of ethanol, and the residual ratio of gallic acid was 42.5% based on the green tea extract containing the aqueous solution of ethanol. The production conditions and analysis results of this example are shown in Table 1.

### Example 3

By a similar procedure as in Example 1 except that the 20 mass% aqueous solution of ethanol was changed to a 60 mass% aqueous solution of ethanol, a green tea extract containing an aqueous solution of ethanol was prepared, and a purified green tea extract (97.8 g) was obtained. In the purified green tea extract so obtained, the concentration of the non-polymer catechins was 0.800 mass%, the ratio of gallate forms in the non-polymer catechins was 30 mass%, the concentration of gallic acid was 0.047 mass%, and the mass ratio of gallic acid/the non-polymer catechins was 0.059. Further, the yield of the non-polymer catechins was 84.3% based on the green tea extract containing the aqueous solution of ethanol, and the residual ratio of gallic acid was 41.2% based on the green tea extract containing the aqueous solution of ethanol. The production conditions and analysis results of this example are shown in Table 1.

### Example 4

By a similar procedure as in Example 1 except that the 20 mass% aqueous solution of ethanol was changed to an 80 mass% aqueous solution of ethanol, a green tea extract containing an aqueous solution of ethanol was prepared, and a purified green tea extract (97.9 g) was obtained. In the purified green tea extract so obtained, the concentration of the non-polymer catechins was 0.821 mass%, the ratio of gallate forms in the non-polymer catechins was 32 mass%, the concentration of gallic acid was 0.040 mass%, and the mass ratio of gallic acid/the non-polymer catechins was 0.049. Further, the yield of the non-polymer catechins was 86.0% based on the green tea extract containing the aqueous solution of ethanol, and the residual ratio of gallic acid was 33.9% based on the green tea extract containing the aqueous solution of ethanol. The production conditions and analysis results of this example are shown in Table 1.

### Comparative Example 1

By a similar procedure as in Example 1 except that an aqueous solution of a green tea extract was prepared by changing the 20 mass% aqueous solution of ethanol to water, a purified green tea extract (97.6 g) was obtained. In the purified green tea extract so obtained, the concentration of the non-polymer catechins was 0.501 mass%, the ratio of gallate forms in the non-polymer catechins was 10 mass%, the concentration of gallic acid was 0.038 mass%, and the mass ratio of gallic acid/the non-polymer catechins was 0.076. Further, the yield of the non-polymer catechins was 53.4% based on the aqueous solution of the green tea extract, and the percent residue of gallic acid was 32.8% based on the aqueous solution of the green tea extract. The production conditions and analysis results of this comparative example are shown in Table 1.

### Comparative Example 2

By a similar procedure as in Comparative Example 1 except that the used amount of the ascorbate-form anion exchange resin was changed to 1 g for 100 g of an aqueous solution of a green tea extract, the aqueous solution of the green tea extract was prepared, and a purified green tea extract (99.4 g) was obtained. In the purified green tea extract so obtained, the concentration of the non-polymer catechins was 0.793 mass%, the ratio of gallate forms in the non-polymer catechins was 31.4 mass%, the concentration of gallic acid was 0.087 mass%, and the mass ratio of gallic acid/the non-polymer catechins was 0.110. Further, the yield of the non-polymer catechins was 84.4% based on the aqueous solution of the green tea extract, and the residual ratio of gallic acid was 75.3% based on the aqueous solution of the green tea extract. The production conditions and analysis results of this comparative example are shown in Table 1.

**Table 1**

| | | | Ex. 1 | Ex. 2 | Ex. 3 | Ex. 4 | Comp. Ex. 1 | Comp. Ex. 2 |
|---|---|---|---|---|---|---|---|---|
| Contact treatment | Concn. of ethanol in aq. soln. of ethanol | Mass% | 20 | 40 | 60 | 80 | 0 | 0 |
| | Anion exchange resin | - | Ascorbate -form | Ascorbate -form | Ascorbate -form | Ascorbate -form | Ascorbate -form | Ascorbate -form |
| | Anion exchange resin/tea extract containing aq. soln. of ethanol or water | Mass ratio | 0.040 | 0.040 | 0.040 | 0.040 | 0.040 | 0.010 |
| Green tea extract before purification | Concn. of gallic acid | Mass% | 0.116 | 0.117 | 0.114 | 0.119 | 0.115 | 0.115 |
| | Conen. of the non-polymer catechins | Mass% | 0.938 | 0.956 | 0.948 | 0.954 | 0.939 | 0.939 |
| | Gallic acid/the non-polymer catechins | Mass ratio | 0.124 | 0.122 | 0.121 | 0.124 | 0.123 | 0.123 |
| Green tea extract after purification | Conen. of gallic acid | Mass% | 0.045 | 0.050 | 0.047 | 0.040 | 0.038 | 0.087 |
| | Concn. of the non-polymer catechins | Mass% | 0.675 | 0.785 | 0.800 | 0.821 | 0.501 | 0.793 |
| | Gallic acid/the non-polymer catechins | Mass ratio | 0.067 | 0.063 | 0.059 | 0.049 | 0.076 | 0.110 |
| | Yield of the non-polymer catechins | % | 71.9 | 82.0 | 84.3 | 86.0 | 53.4 | 84.4 |
| | Residual ratio of gallic acid | % | 39.1 | 42.5 | 41.2 | 33.9 | 32.8 | 75.3 |
| Concentration of gallic acid at the evaluation of taste and flavor | | mg/ 100mL | 11.8 | 11.1 | 10.3 | 8.6 | 13.2 | 19.2 |
| Taste and flavor evaluation: sourness | | - | 3 | 3 | 4 | 5 | 2 | 1 |
| Taste and flavor evaluation: harshness | | - | 3 | 3 | 3 | 3 | 3 | 3 |

### Example 5

By a similar procedure as in Example 4 except that the ascorbate-form anion exchange resin was changed to the acetate-form anion exchange resin (2 g), a green tea extract containing an aqueous solution of ethanol was prepared, and a purified green tea extract (98.5 g) was obtained. In the purified green tea extract so obtained, the concentration of the non-polymer catechins was 0.690 mass%, the ratio of gallate forms in the non-polymer catechins was 31.6 mass%, the concentration of gallic acid was 0.014 mass%, and the mass ratio of gallic acid/the non-polymer catechins was 0.020. Further, the yield of the non-polymer catechins was 79.3% based on the green tea extract containing the aqueous solution of ethanol, and the residual ratio of gallic acid was 12.7% based on the green tea extract containing the aqueous solution of ethanol. The production conditions and analysis results of this example are shown in Table 2.

### Comparative Example 3

By a similar procedure as in Example 5 except that an aqueous solution of a green tea extract was prepared by changing the 80 mass% aqueous solution of ethanol to water, a purified green tea extract (98.4 g) was obtained. In the purified green tea extract so obtained, the concentration of the non-polymer catechins was 0.685 mass%, the ratio of gallate forms in the non-polymer catechins was 23.0 mass%, the concentration of gallic acid was 0.060 mass%, and the mass ratio of gallic acid/the non-polymer catechins was 0.088. Further, the yield of the non-polymer catechins was 77.3% based on the aqueous solution of the green tea extract, and the residual ratio of gallic acid was 54.7% based on the aqueous solution of the green tea extract. The production conditions and analysis results of this comparative example are shown in Table 2.

**Table 2**

| | | | Ex. 5 | Comp. Ex. 3 |
|---|---|---|---|---|
| Contact treatment | Concentration of ethanol in aqueous solution of ethanol | Mass% | 80 | 0 |
| | Anion exchange resin | - | Acetate -form | Acetate -form |
| | Anion exchange resin/tea extract containing aqueous solution of ethanol or water | Mass ratio | 0.020 | 0.020 |
| Green tea extract before purification | Concentration of gallic acid | Mass% | 0.110 | 0.110 |
| | Concentration of the non-polymer catechins | Mass% | 0.869 | 0.886 |
| | Gallic acid/the non-polymer catechins | Mass ratio | 0.126 | 0.123 |
| Green tea extract after purification | Concentration of gallic acid | Mass% | 0.014 | 0.060 |
| | Concentration of the non-polymer catechins | Mass% | 0.690 | 0.685 |
| | Gallic acid/the non-polymer catechins | Mass ratio | 0.020 | 0.088 |
| | Yield of the non-polymer catechins | % | 79.3 | 77.3 |
| | Residual ratio of gallic acid | % | 12.7 | 54.7 |
| Concentration of gallic acid at the evaluation of taste and flavor | | mg/100mL | 3.5 | 15.3 |
| Taste and flavor evaluation: sourness | | - | 3 | 1 |
| Taste and flavor evaluation: harshness | | - | 3 | 3 |

### Example 6

A solid (concentration of the non-polymer catechins: 30 mass%, ratio of gallate forms in the non-polymer catechins: 32 mass%, concentration of gallic acid: 3.7 mass%; 200 g) of a green tea extract, which had been subj ected to tannase treatment beforehand, was fully mixed with an aliquot (800 g) of an 80 mass% aqueous solution of ethanol, and the resulting deposit was filtered off by a filter paper. The filtrate was next adjusted in concentration with a fresh aliquot of the 80 mass% aqueous solution of ethanol such that the concentration of the non-polymer catechins was become to approx. 0.9 mass%, whereby a green tea extract containing an aqueous solution of ethanol was obtained. In the green tea extract with the aqueous solution of ethanol contained therein, the concentration of the non-polymer catechins was 0.921 mass%, the ratio of gallate forms in the non-polymer catechins was 32 mass%, and the concentration of gallic acid was 0.097 mass%.

The ascorbate-form anion exchange resin obtained in Production Example 1 was washed with another fresh aliquot of the 80 mass% aqueous solution of ethanol. A portion (32.4 g) of the anion exchange resin after the washing was packed in a column (column volume: 40 mL). An aliquot (2,600 g) of the green tea extract containing the aqueous solution of ethanol was next passed at 25°C and a flow rate of 10 mL/min (SV = 15/hr) through the column to obtain a purified green tea extract (2,596 g). In the purified green tea extract so obtained, the concentration of the non-polymer catechins was 0.913 mass%, the ratio of gallate forms in the non-polymer catechins was 32 mass%, the concentration of gallic acid was 0.061 mass%, and the mass ratio of gallic acid/the non-polymer catechins was 0.067. Further, the yield of the non-polymer catechins was 99.0% based on the green tea extract containing the aqueous solution of ethanol, and the residual ratio of gallic acid was 62.8% based on the green tea extract containing the aqueous solution of ethanol. The production conditions and analysis results of this example are shown in Table 3.

### Example 7

A green tea extract (2,600 g) containing an aqueous solution of ethanol was obtained by a similar procedure as in Example 6, and was then passed under similar conditions as in Example 6 through the column packed with the ascorbate-form anion exchange resin. The solution so obtained was next passed at 25°C through a column packed with activated carbon ("KURARAY COAL GLC", product of Kuraray Chemical Co., Ltd.; 15.4 g) to obtain a purified green tea extract (2,559 g). In the purified green tea extract so obtained, the concentration of the non-polymer catechins was 0.819 mass%, the ratio of gallate forms in the non-polymer catechins was 31 mass%, the concentration of gallic acid was 0.060 mass%, and the mass ratio of gallic acid/the non-polymer catechins was 0.073. Further, the yield of the non-polymer catechins was 87.6% based on the green tea extract containing the aqueous solution of ethanol, and the residual ratio of gallic acid was 61.6% based on the green tea extract containing the aqueous solution of ethanol. The production conditions and analysis results of this example are shown in Table 3.

### Comparative Example 4

An aqueous solution of a green tea extract was obtained by a similar procedure as in Example 6 except that the 80 mass% aqueous solution of ethanol was changed to water. In the aqueous solution of the green tea extract so obtained, the concentration of the non-polymer catechins was 0.850 mass%, the ratio of gallate forms in the non-polymer catechins was 31 mass%, and the concentration of gallic acid was 0.103 mass%.

The aqueous solution of the green tea extract was then passed under similar conditions as in Example 6 through the column packed with the ascorbate-form anion exchange resin to obtain a purified green tea extract (3,900 g) . In the purified green tea extract so obtained, the concentration of the non-polymer catechins was 0.731 mass%, the ratio of gallate forms in the non-polymer catechins was 31.0 mass%, the concentration of gallic acid was 0.064 mass%, and the mass ratio of gallic acid/the non-polymer catechins was 0.088. Further, the yield of the non-polymer catechins was 86.0% based on the aqueous solution of the green tea extract, and the residual ratio of gallic acid was 62.3% based on the aqueous solution of the green tea extract. The production conditions and analysis results of this comparative example are shown in Table 3.

**Table 3**

| | | | Ex. 6 | Ex. 7 | Comp. Ex. 4 |
|---|---|---|---|---|---|
| Contact treatment | Concentration of ethanol in aqueous solution of ethanol | Mass% | 80 | 80 | 0 |
| | Anion exchange resin | - | Ascorbate -form | Ascorbate -form | Ascorbate -form |
| | Anion exchange resin/tea extract containing aqueous solution of ethanol or water | Mass ratio | 0.012 | 0.012 | 0.008 |
| Treatment with activated carbon | Activated carbon (relative to mass part of the non-polymer catechins) | mass part | - | 0.65 | - |
| Green tea extract before purification | Concentration of gallic acid | Mass% | 0.097 | 0.097 | 0.103 |
| | Concentration of the non-polymer catechins | Mass% | 0.921 | 0.921 | 0.850 |
| | Gallic acid/the non-polymer catechins | Mass ratio | 0.106 | 0.106 | 0.121 |
| Green tea extract after purification | Concentration of gallic acid | Mass% | 0.061 | 0.060 | 0.064 |
| | Concentration of the non-polymer catechins | Mass% | 0.913 | 0.819 | 0.731 |
| | Gallic acid/the non-polymer catechins | Mass ratio | 0.067 | 0.073 | 0.088 |
| | Yield of the non-polymer catechins | % | 99.0 | 87.6 | 86.0 |
| | Residual ratio of gallic acid | % | 62.8 | 61.6 | 62.3 |
| Concentration of gallic acid at the evaluation of taste and flavor | | mg/ 100mL | 11.7 | 12.8 | 15.3 |
| Taste and flavor evaluation: sourness | | - | 3 | 3 | 1 |
| Taste and flavor evaluation: harshness | | - | 3 | 5 | 3 |

From Table 1, it has been found that, when a tea extract is brought into contact with an ascorbate-form anion exchange resin in the presence of an aqueous solution of an organic solvent, it is possible not only to efficiently remove gallic acid but also to recover the non-polymer catechins with high yield. It has also been found that, when the resulting purified tea extract is diluted to lower the concentration of the non-polymer catechins to a predetermined level, the concentration of gallic acid can be lowered, and consequently the sourness originated to gallic acid is also reduced.

From Tables 1 and 2, it has been found that, when as an anion exchange resin, one exchanged with anionic groups derived from a weak acid having a pKa of from 4.16 to 5 is used, it is possible not only to efficiently remove gallic acid but also to recover the non-polymer catechins with high yield.

From Table 3, it has been found that the contact with an anion exchange resin in the presence of an aqueous solution of an organic solvent can recover the non-polymer catechins with high yield and can also efficiently remove gallic acid even by passing it through the column, without being limited to a batch operation. From the results of the taste and flavor evaluation, it was also possible to reduce likewise sourness considered to have originated from gallic acid.

In addition, it has been indicated that the harshness of a tea extract can be more effectively reduced by treating it through a combination of its contact with an anion exchange resin in the presence of an aqueous solution of an organic solvent and its contact with activated carbon. The purified tea extract so obtained was reduced in gallic acid, and from the results of the evaluation of taste and flavor, was found to be reduced in both sourness and harshness.

## Claims

1. A method for producing a purified tea extract, comprising bringing a tea extract, which contains an aqueous solution of ethanol, into contact with an anion exchange resin.

2. The method according to claim 1, wherein the tea extract is subjected to tannase treatment.

3. The method according to claim 1 or 2, wherein the concentration of ethanol in the aqueous solution is from 10 to 95 mass%.

4. The method according to any one of claims 1 to 3, wherein the anion exchange resin is exchanged with anionic groups derived from an organic acid having a pKa of from 4.16 to 8.55.

5. The method according to claim 4, wherein the organic acid is selected from ascorbic acid, acetic acid, propionic acid, butyric acid and valeric acid.

6. The method according to any one of claims 1 to 5, wherein the amount of anion exchange resin is 0.001 to 0.5 times the total mass of the tea extract.

7. The method according to any one of claims 1 to 6, wherein the concentration of the non-polymer catechins in the tea extract is from 0.1 to 6 mass%.

8. The method according to any one of claims 1 to 7, further comprising bringing the tea extract, which has been brought into contact to the anion exchange resin, into contact with activated carbon.

9. The method according to any one of claims 1 to 8, wherein the tea extract is a green tea extract.

## Patentansprüche

1. Verfahren zur Herstellung eines gereinigten Tee-Extrakts, das das in Kontakt bringen eines Tee-Extrakts, das eine wässrige Ethanollösung enthält, mit einem Anionenaustauscherharz umfasst.

2. Verfahren gemäß Anspruch 1, worin das Tee-Extrakt einer Tannasebehandlung unterzogen wird.

3. Verfahren gemäß Anspruch 1 oder 2, worin die Konzentration des Ethanols in der wässrigen Lösung von 10 bis 95 Massen% ist.

4. Verfahren gemäß irgendeinem der Ansprüche 1 bis 3, worin das Anionenaustauscherharz mit anionischen Gruppen ausgetauscht ist, die von einer organischen Säure mit einem pKa von 4,16 bis 8,55 abgeleitet sind.

5. Verfahren gemäß Anspruch 4, worin die organische Säure aus Ascorbinsäure, Essigsäure, Propionsäure, Buttersäure und Valerinsäure ausgewählt ist.

6. Verfahren gemäß irgendeinem der Ansprüche 1 bis 5, worin die Menge des Anionenaustauscherharzes das 0,001- bis 0,5-fache der Gesamtmasse des Tee-Extrakts ist.

7. Verfahren gemäß irgendeinem der Ansprüche 1 bis 6, worin die Konzentrationen der nicht-polymeren Catechine im Tee-Extrakt 0,1 bis 6 Massen% ist.

8. Verfahren gemäß irgendeinem der Ansprüche 1 bis 7, das weiterhin das in Kontakt bringen des Tee-Extrakts, das mit dem Anionenaustauscherharz in Kontakt gebracht wurde, mit Aktivkohle umfasst.

9. Verfahren gemäß irgendeinem der Ansprüche 1 bis 8, worin das Tee-Extrakt ein Grüntee-Extrakt ist.

## Revendications

1. Un procédé de production d'extrait de thé purifié, comprenant la mise en contact d'un extrait de thé, qui contient une solution aqueuse d'éthanol, avec une résine échangeuse d'anions.

2. Le procédé selon la revendication 1, dans lequel l'extrait de thé est soumis à un traitement de tannase.

3. Le procédé selon la revendication 1 ou 2, dans lequel la concentration d'éthanol dans la solution aqueuse est de 10 à 95 % en masse.

4. Le procédé selon l'une quelconque des revendications 1 à 3, dans lequel la résine échangeuse d'anions est échangée avec des groupes anioniques dérivés d'un acide organique ayant un pKa de 4.16 à 8.55.

5. Le procédé selon la revendication 4, dans lequel l'acide organique est choisi parmi l'acide ascorbique, l'acide acétique, l'acide propionique, l'acide butyrique et l'acide valérique.

6. Le procédé selon l'une quelconque des revendications 1 à 5, dans lequel la quantité de résine échangeuse d'anions est 0,001 à 0,5 fois la masse totale de l'extrait de thé.

7. Le procédé selon l'une quelconque des revendications 1 à 6, dans lequel la concentration des catéchines non polymères dans l'extrait de thé est de 0,1 à 6 % en masse.

8. Le procédé selon l'une quelconque des revendications 1 à 7, comprenant en outre la mise en contact de l'extrait de thé, qui a été mis en contact avec la résine échangeuse d'anions, avec du charbon actif.

9. Le procédé selon l'une quelconque des revendications 1 à 8, dans lequel l'extrait de thé est un extrait de thé vert.
